Europäisches Patentamt

European Patent Office

Office européen des brevets

(19)

(11) Publication number: **0 400 945 A2**

# EUROPEAN PATENT APPLICATION

(21) Application number: **90305792.5**

(22) Date of filing: **29.05.90**

(51) Int. Cl.⁵: **H04N 7/00**

(30) Priority: **29.05.89 JP 135003/89**

(43) Date of publication of application:
**05.12.90 Bulletin 90/49**

(84) Designated Contracting States:
**DE FR GB**

(71) Applicant: **SONY CORPORATION**
**7-35 Kitashinagawa 6-Chome Shinagawa-ku**
**Tokyo 141(JP)**

(72) Inventor: **Tanaka, Yutaka**
**c/o Sony Corporation, 7-35 Kitashinagawa**
**6-chome**
**Shinagawa-ku, Tokyo(JP)**
Inventor: **Yuchi, Hirofumi**
**c/o Sony Corporation, 7-35 Kitashinagawa**
**6-chome**
**Shinagawa-ku, Tokyo(JP)**

(74) Representative: **Ayers, Martyn Lewis Stanley**
**et al**
**J.A. KEMP & CO., 14 South Square, Grays Inn**
**London WC1R 5LX(GB)**

(54) Television signal transmitting system.

(57) A television signal transmitting system for use in television transmission in one of a number of television channels which are spaced apart in frequency by nominally vacant channels, which system transmits a mixed signal in which a main signal of one channel of a television signal is combined with an additional signal, the system comprising:

modulating means for two-phased quadrature modulating said additional signal combined with said main signal so as to become symmetrical to a vestigial sideband component as a central frequency which is a modulating frequency of said main signal when said additional signal is demodulated, wherein modulation of the additional signal is such that it is transmitted as its lower sideband which overlaps the lower part of the frequency spectrum of the main channel band and the upper part of the vacant channel which is adjacent to, and lower in frequency than, the main channel band.

*FIG. 5A*

## TELEVISION SIGNAL TRANSMITTING SYSTEM

The present invention relates generally to television signal transmitting systems and, more particularly, is directed to a television signal transmitting system which can transmit as much as 1.5 times more information as compared with an existing television signal transmitting system by effectively utilising the signal band of a television signal.

In conventional television broadcasting via radio waves, the bandwidth of one channel is 6 MHz and the signal is modulated by a so-called vestigial side band amplitude modulation (VSB-AM). Recently, there has been a large demand for pictures of large size and high quality so that a so-called extended definition television (EDTV) system has been developed so as to transmit a television picture of high quality. For this reason, various proposals are being made in order to improve an image quality by utilising the bandwidth of the NTSC television signal.

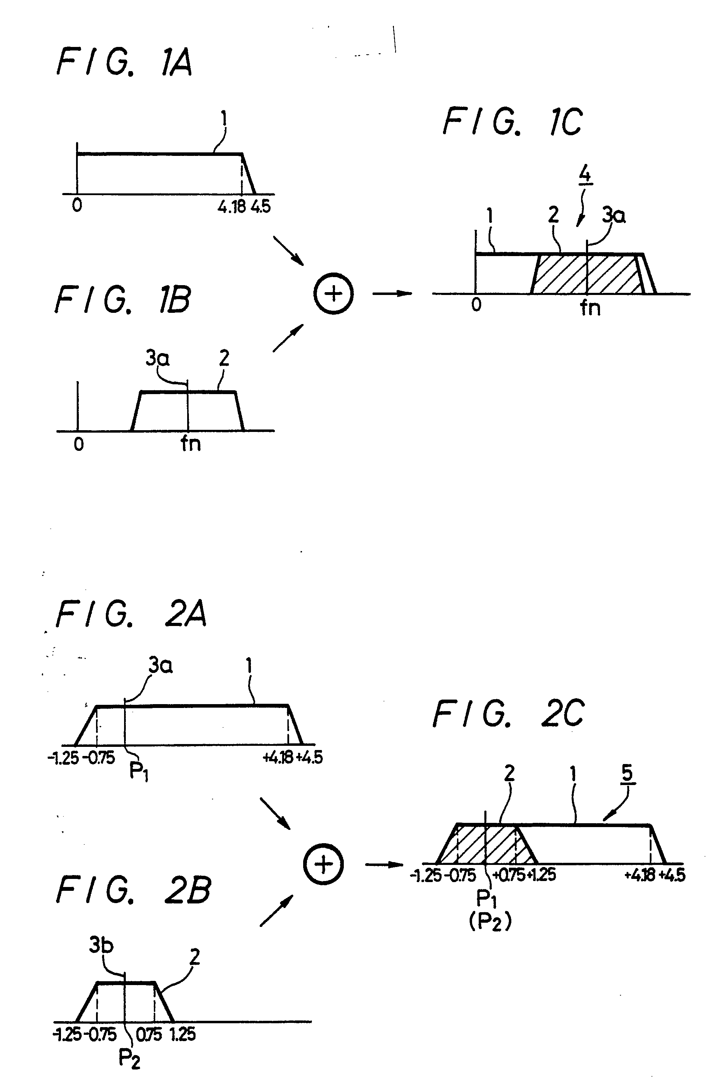

Figures 1A, 1B and 1C of the accompanying drawings are diagrams of frequency spectra showing one prior-art system effectively utilising the signal band of a television signal, and to which reference will be made in explaining a frequency-multiplexing system, respectively.

Referring to figure 1A, there is shown a main signal 1 which might be a luminance signal Y having a bandwidth of from 0 to 4.5 MHz similarly to the NTSC system. In order to transmit this luminance signal Y as an EDTV signal whose luminance is further increased, by utilising a carrier signal 3a having a new carrier frequency fn similarly to a prior-art chroma signal, high band information of the luminance signal Y is superimposed upon the band of the main signal 1 of 0 to 4.2 MHz as an additional information signal 2 (see figure 1B) as represented by the frequency spectrum 4 in figure 1C, which is then transmitted.

Figures 2A, 2B and 2C are, respectively, diagrams of frequency spectra showing another prior-art system effectively utilising the band of a television signal and to which reference will be made in explaining a frequency multiplex system.

Referring to figure 2A, when the luminance signal Y, provided as the main signal 1, is amplitude-modulated according to the VSB-AM system, a lower portion of the carrier 3a having a carrier frequency $P_1$ of the main signal 1, ie, the luminance signal Y lies in a band of 1.25 MHz. In the next process, the additional information signal 2 to be frequency-multiplexed is amplitude-modulated according to a carrier suppression system by a carrier 3b having a carrier frequency $P_2$ whose phase differs from that of the carrier frequency $P_1$ of the main signal 1 by 90 degrees as shown in figure 2B. Thus, the additional information signal 2 is superimposed upon a band of ± 1 MHz of the main signal 1 as a double-side band characteristic frequency spectrum 5 shown in figure 2C.

According to the above described two systems, the additional information signal 2 is multiplexed with the main signal 1, thereby to effectively utilise the band of the television signal.

In accordance with the prior art arrangements shown in figures 1A to 1C and figures 2A to 2C, although the image quality can be improved by effectively utilising the band of a television signal to some extent, the bandwidth which can be utilised as the additional information signal 2, is approximately 1 to 2 MHz. This bandwidth is not wide enough to transmit a television signal upon which various additional information signals 2 having a bandwidth wider than 1 to 1 MHz are superimposed. Furthermore, in the example shown in figures 1A, 1B and 1C since the carrier 3a having the new carrier frequency fn is employed, the required modulation and demodulation circuits become complicated in circuit arrangement.

Accordingly, it is a general object of the present invention to provide an improved television signal transmitting system.

According to one aspect of the present invention there is provided a television signal transmitting system for use in television transmission in one of a number of television channels which are spaced apart in frequency by nominally vacant channels, which system transmits a mixed signal in which a main signal of one channel of a television signal is combined with an additional signal, the system comprising:

modulating means for two-phased quadrature modulating said additional signal combined with said main signal so as to become symmetrical to a vestigial sideband component as a central frequency which is a modulating frequency of said main signal when said additional signal is demodulated, wherein modulation of the additional signal is such that it is transmitted as its lower sideband which overlaps the lower part of the frequency spectrum of the main channel band and the upper part of the vacant channel which is adjacent to, and lower in frequency than, the main channel band.

This aspect of the invention also provides a television signal transmitting apparatus comprising:

a first modulator for modulating a first carrier frequency signal by a main signal;

a second modulator for modulating a second carrier frequency signal by an additional signal;

band limiting means for limiting an output signal from said first and second modulators so as to become symmetrical with a vestigial sideband of said additional signal and a vestigial sideband of said main signal as a central frequency which is a modulating frequency when said additional signal is demodulated;

adding means for adding said main signal and said additional signal from said band limiting means, wherein said main signal and said additional signal are transmitted in the quadrature modulated form.

A second aspect of the invention provides a television signal reception system for transmitting a mixing signal in which a main signal of one channel of a television signal is combined with an additional signal, comprising:

demodulating means for demodulating said mixing signal which is modulated by a two-phased quadrature modulation so as to become symmetrical with a vestigial sideband component as a central frequency that is a modulating frequency of said main signal;

first band pass means for deriving from the demodulated signal said main signal; and

second band pass means for deriving from the demodulated signal said additional signal.

The invention will be further described by way of non-limitative example with reference to the accompanying drawings, in which:-

Figures 1A, 1B and 1C are diagrams of frequency spectra used to explain an example of the prior art frequency multiplexing system, respectively;

Figures 2A, 2B and 2C are diagrams of frequency spectra used to explain another example of the prior art frequency multiplexing system, respectively;

Figure 3 is a systematic block diagram useful for understanding a principle of a television signal transmitting system according to the present invention;

Figure 4 is a schematic diagram showing a frequency allocation of a television broadcasting in the same area;

Figures 5A and 5B are schematic diagrams used to explain a way of how to utilise a lower side adjacent channel, respectively;

Figures 6A and 6B are schematic diagrams of frequency band characteristics of a main signal and an additional information signal, respectively;

Figures 7A and 7B are schematic diagrams of frequency band characteristics of a Nyquist filter of a television receiver and an additional information signal, respectively;

Figures 8A and 8B are systematic block diagrams showing an embodiment of the television signal transmitting system according to the present invention, respectively; and

Figures 9A, 9B and 9C are schematic diagrams used to explain a scanning line signal provided as an additional information.

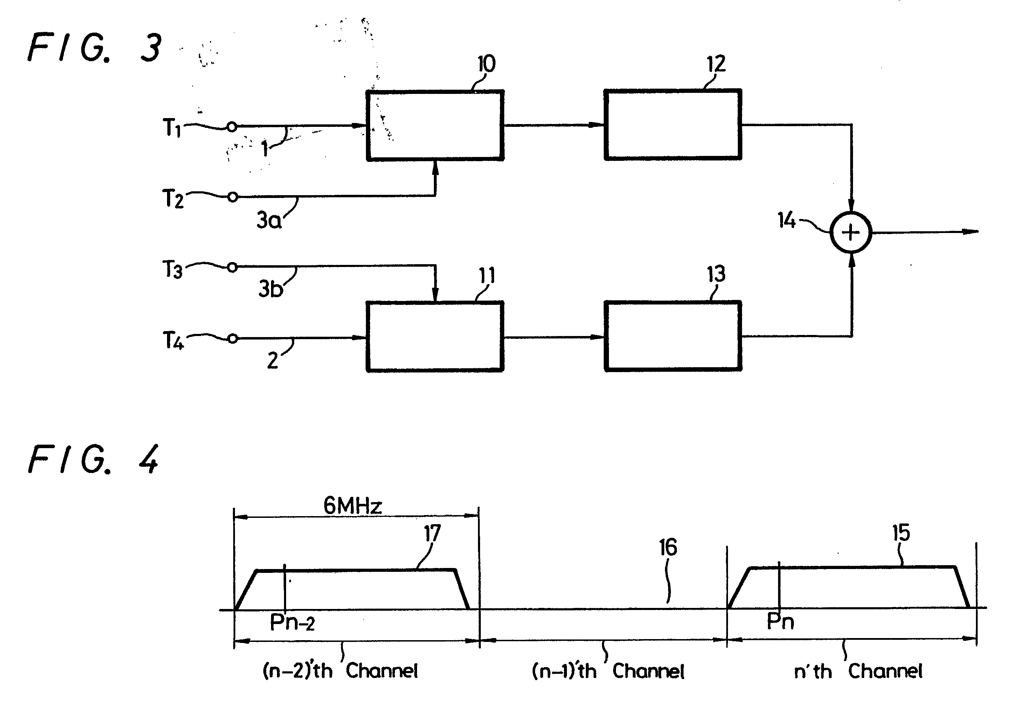

In order to understand the present invention more clearly, let us initially explain a fundamental principle of a television signal transmitting system of this invention with reference to figures 3 to 7.

Initially, consider the occupancy of channels of the existing television system under a typical channel allocation. In that case, as shown in figure 4, the frequency allocation is performed such that a (n-1)'th channel 16 adjacent to an n'th channel 15 may not be used, ie, (n-1)'th channel 16, which is located to the lower side of the n'th channel 15, become a vacant channel. Therefore, in this embodiment, the additional information signal 2 is transmitted by effectively utilising the vacant (n-1)-'th channel 16.

Figure 3 shows a systematic block diagram of a transmitting system showing a principle of a television transmitting system in which an additional information signal is combined with a main signal and is then transmitted.

Referring to figure 3, a main signal 1 is applied to an input terminal $T_1$, and an additional information signal 2 is applied to an input terminal $T_4$. A first carrier $\cos \omega_0 t$ 3a and a second picture carrier $\sin \omega_0 t$ 3b are applied to carrier input terminals $T_2$ and $T_3$, respectively. The first and second carriers $\cos \omega_0 t$ and $\sin \omega_0 t$ 3a and 3b have the same carrier frequency and differ from each other in phase by 90 degrees. The main signal 1 and the additional information signal 2 are supplied to first and second modulators 10 and 11, respectively; likewise the first and second carriers 3a and 3b are supplied to the first and second modulators 10 and 11, respectively. Accordingly, in the first modulator 10, the first carrier 3a is, for example, vestigial sideband amplitude modulated by the main signal 1, whereas in the second modulator 11, the second carrier 3b is similarly vestigial sideband amplitude modulated by the additional information signal 2.

The modulated signals amplitude-modulated by the first and second modulators 10 and 11 are supplied to first and second bandpass filters (BPF) 12 and 13, respectively. The first and second bandpass filters 12 and 13 limit the bands of the modulated signals such that the vestigial sideband waves become symmetrical with respect to the vestigial side band of the main signal 1 and the modulation signals $P_1$ and $P_2$ when the additional information signal is demodulated.

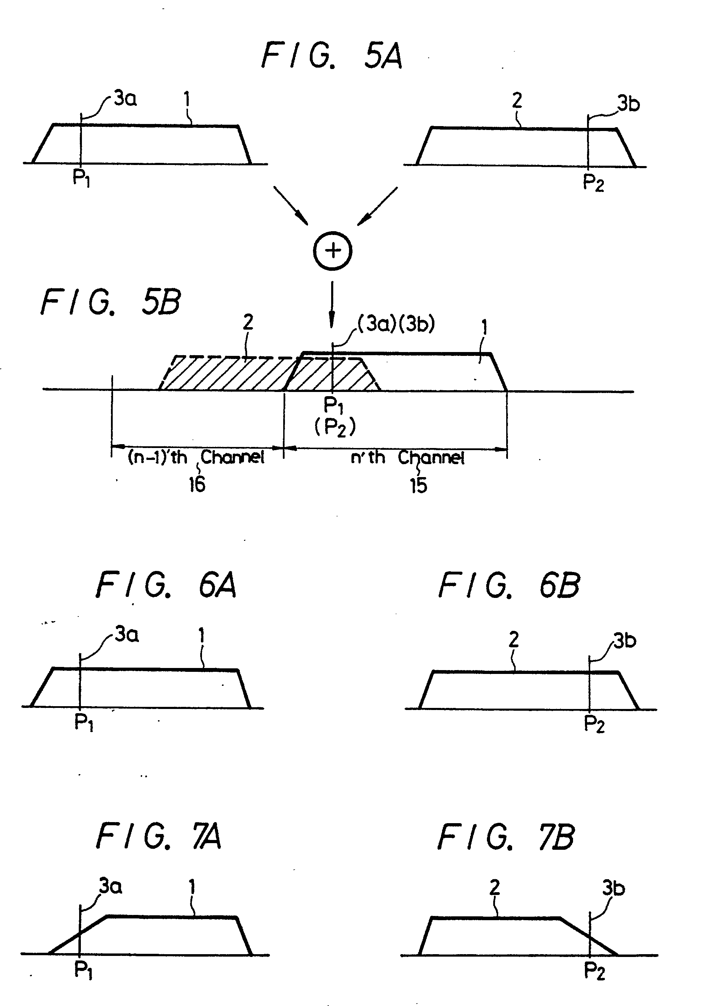

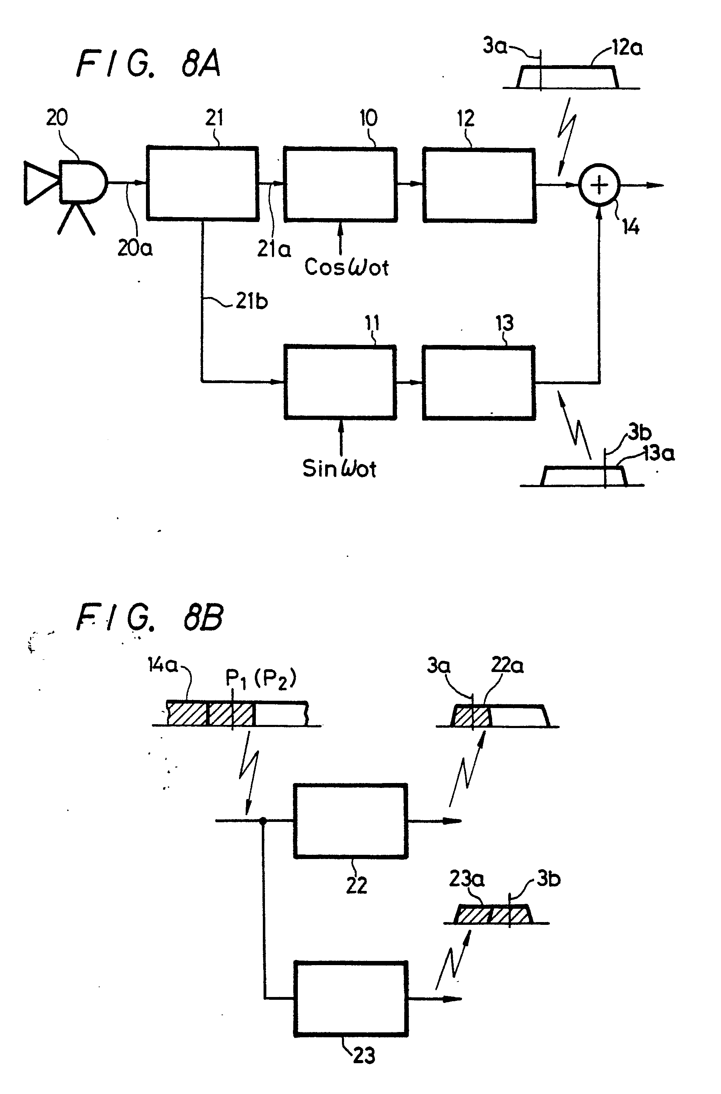

More precisely, when the main signal 1 is supplied to the first bandpass filter 12 and thereby limited in bandwidth, if the existing frequency spectrum band is utilised as shown in figure 6A, the bandwidth of the additional information signal 2 to be supplied to the second bandpass filter 13 is limited such that, as shown in figure 6B, the carrier 3b of the additional information signal 2 becomes symmetrical with the carrier 3a of the main signal 1 with respect to the centre. When the main signal 1 and the additional information signal 2 thus band-limited as shown in figure 5A are supplied to an adder 14, the output of the adder 14 is the sum main signal 1 and the additional information signal 2 are combined as shown in figure 5B. That is, under the condition that the additional information signal 2 is inserted into the (n-1)'th channel 16, ie, the vacant channel which is located below the n'th channel 15, the main signal 1 and the additional information signal 2 are derived from the adder 14 under the condition that they are two-phase quadrature modulated and then transmitted.

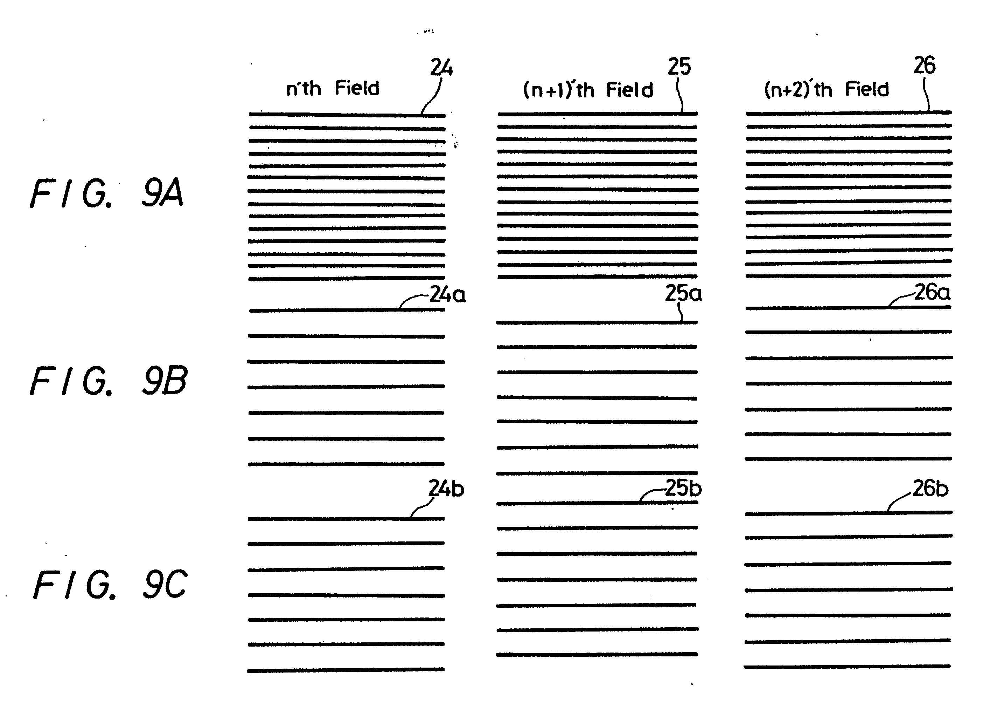

Further, in order to maintain compatibility with the existing television receiver and so on, the television receiver of the invention incorporates therein a Nyquist filter whose Nyquist characteristic (-6 dB at the position of the carrier 3a of the carrier frequency $P_1$, 0 dB at the position of $P_1$-0.75, and ∞ at the position of $P_1$ +0.75) represents the total frequency characteristic from the tuner to the video detector as shown in figure 7A so that the bandwidth is limited so as to provide a vestigial side band which becomes symmetrical with the Nyquist filter characteristic upon demodulation as shown in figure 7B. In other words, the filter characteristic of the second bandpass filter 13 is selected so as to provide an inverse Nyquist characteristic (-6 dB at the position of the carrier 3b of the carrier frequency $P_2$, ∞ at the position of $P_2$-0.75 and 0 dB at the position of $P_2$ +0.75).

When the additional information signal 2 is quadrature modulated and superimposed upon the main signal 1 to be transmitted as described above, if the vacant channel 16 is employed, the transmission of the additional information having a wide band (wider than 1.5 times the band of the prior art) becomes possible without the bandwidth of the additional information signal 2 being restricted to about 1 MHz as in the prior art.

In that case, since the additional information signal 2 is multiplexed with the main signal 1 by utilising the lower vacant channel 16, there might seem to be the substantial possibility that the lower (n-2)'th adjacent channel 17 may be disturbed by the superimposed additional information signal 2. However, the energy of the high band of the signal is generally small so that, even when the high band of the additional information signal 2 is mixed into the lower side adjacent channel 17, the influence exerted thereby is very small.

Figures 8A and 8B are systematic block diagrams showing a transmission system and a reception system of a television receiver wherein a non-interlace signal is added as an additional information signal as a television signal transmitting system of the present invention, respectively. Figures 9A, 9B and 9C are schematic diagrams used to explain the scanning lines thereof, respectively.

Referring to figure 8A, there is provided a vide camera 20 which might be a non-interlace video camera. The video camera 20 derives a video output 20a in the non-interlace scanning line form of such as an n'th field 24, a (n+1)'th field 25 and a (n+2)'th field 26 as shown in figure 9A. The video output 20a having the above described scanning lines is supplied to a scanning line separating circuit 21, whereby the scanning line separating circuit 21 derives at a first output terminal 21a thereof an output in the form of the NTSC scanning lines of such as an n'th field 24a, a (n+1)'th field 25a and a (n+2)'th field 26a as shown in figure 9B. Also, the scanning line separating circuit 21 derives at a second output terminal 21b thereof a video output of scanning lines (see figure 9C) of such as an n'th field 24b, a (n+1)'th field 25b and a (n+2)-'th field 26b which result form subtracting the scanning lines (see figure 9B) of n'th field 24a, (n+1)'th field 25a and (n+2)'th field 26a from the scanning lines (see figure 9A) of n'th field 24, (n+1)'th field 25 and (N+2)'th field 26.

In this embodiment, the scanning line separating video output is utilised as the additional information signal 2. That is, similarly to figure 3, the NTSC signal, which is provided as the main signal 1, is supplied to the first modulator 10, and the output video signal (see figure 9C), which becomes the additional information signal, is supplied to the second modulator 11. Therefore, a first carrier cost $\omega_0 t$ (3a) and a second carrier sin $\omega_0 t$ (3b) which are of the same carrier frequency and which differ in phase from each other by 90 degrees are amplitude modulated by the main signal 1 and the additional information signal 2, respectively. When the modulated output signals are band limited by the first and second bandpass filters 12 and 13, respectively, the first bandpass filter 12 derives as an output thereof an NTSC video signal 12a of, for example, the main signal in which the carrier 3a is modulated by the main signal and distributed in the n'th channel band, whereas the second bandpass filter 13 derives as an output thereof a separated video output signal of the additional information signal in which the carrier 3b is modulated by the additional information signal and distributed into the (n-1)'th channel below the n'th channel. These output signals of the first and second bandpass filters 12 and 13 are added by an adder 14, thereby transmitted as a multiplexed signal 14a having a band characteristic symmetrical with respect to the frequency $P_1$ and $P_2$.

Figure 8B shows a systematic diagram of a demodulating system of the present invention.

Referring to figure 8B, the multiplexed signal 14a is supplied to third and fourth bandpass filters 22 and 23. Band characteristics of the third and fourth bandpass filters 22 and 23 correspond with those of the first and second bandpass filters 12 and 13 which are described hereinbefore in conjunction with the modulation system of the present invention shown in figure 8A. An output 22a of the third bandpass filter 22 and an output 23a of the fourth bandpass filter 23 have output characteristics shown in figure 8B and are detected by detecting circuits (not shown) provided in the next stage.

The detected output of the third bandpass filter 22 is the NTSC signal (see figure 9B) and the addition of the detected output of the third bandpass filter 22 and the detected output signal of the fourth bandpass filter 23 (ie, figure 9B + figure 9C) gives the non-interlace signal (see figure 9A).

In the aforenoted embodiment of the present invention, as the additional information signal, the signal, which provides the non-interlace information, is added to the main signal. The additional information is not limited thereto and a side panel information, a vertical high frequency component signal which is a difference between the lines or a signal of the combination of the side panel information and the vertical high frequency component signal can be satisfactorily transmitted as the additional information.

According to the television signal transmitting system of the present invention, more than 1.5 times as much information as compared with the existing television broadcast system can be transmitted. Further, since the carriers are of the same frequency, the circuit arrangement can be simplified. Also, the lower side channel is utilised as a vacant channel so that disturbance due to the radio interference can be reduced.

Furthermore, according to the television signal transmitting system of the present invention, the bandwidth of the additional information signal to be multiplexed can be increased to more than 1.5 times that of the prior-art system and then transmitted.

**Claims**

1. A television signal transmitting system for use in television transmission in one of a number of television channels which are spaced apart in frequency by nominally vacant channels, which system transmits a mixed signal in which a main signal of one channel of a television signal is combined with an additional signal, the system comprising:
modulating means for two-phased quadrature modulating said additional signal combined with said main signal so as to become symmetrical to a vestigial sideband component as a central frequency which is a modulating frequency of said main signal when said additional signal is demodulated, wherein modulation of the additional signal is such that it is transmitted as its lower sideband which overlaps the lower part of the frequency spectrum of the main channel band and the upper part of the vacant channel which is adjacent to, and lower in frequency than, the main channel band.

2. A television signal transmitting apparatus comprising:
a first modulator for modulating a first carrier frequency signal by a main signal;
a second modulator for modulating a second carrier frequency signal by an additional signal;
band limiting means for limiting an output signal from said first and second modulators so as to become symmetrical with a vestigial sideband of said additional signal and a vestigial sideband of said main signal as a central frequency which is a modulating frequency when said additional signal is demodulated;
adding means for adding said main signal and said additional signal from said band limiting means, wherein said main signal and said additional signal are transmitted in the quadrature modulated form.

3. A television signal transmitting apparatus according to claim 2, wherein said first and second modulators utilise a vestigial sideband amplitude modulation.

4. A television signal transmitting apparatus according to claim 2, wherein said additional signal is a non-interlace signal.

5. A television signal reception system for transmitting a mixing signal in which a main signal of one channel of a television signal is combined with an additional signal, comprising:
demodulating means for demodulating said mixing signal which is modulated by a two-phased quadrature modulation so as to become symmetrical with a vestigial sideband component as a central frequency that is a modulating frequency of said main signal;
first band pass means for deriving from the demodulated signal said main signal; and
second band pass means for deriving from the demodulated signal said additional signal.

FIG. 1A

FIG. 1B

FIG. 1C

FIG. 2A

FIG. 2B

FIG. 2C

EP 0 400 945 A2

# FIG. 3

T₁ — 1 → [10] → [12] ⟶
T₂ — 3a ↗
                              14 (+) ⟶
T₃ — 3b ↘
T₄ — 2 → [11] → [13] ⟶

# FIG. 4

6MHz

17

Pn-2

16

15

Pn

(n-2)'th Channel   (n-1)'th Channel   n'th Channel

FIG. 5A

FIG. 5B

FIG. 6A

FIG. 6B

FIG. 7A

FIG. 7B

FIG. 8A

$Cos\omega ot$

$Sin\omega ot$

FIG. 8B

$P_1 (P_2)$

EP 0 400 945 A2

FIG. 9A

n'th Field 24

(n+1)'th Field 25

(n+2)'th Field 26

FIG. 9B

24a

25a

26a

FIG. 9C

24b

25b

26b